(19) Europäisches Patentamt / European Patent Office / Office européen des brevets

(11) **EP 3 303 231 B1**

(12) **FASCICULE DE BREVET EUROPEEN**

(45) Date de publication et mention
de la délivrance du brevet:
**06.09.2023 Bulletin 2023/36**

(21) Numéro de dépôt: **16731236.2**

(22) Date de dépôt: **27.05.2016**

(51) Classification Internationale des Brevets (IPC):
*C02F 11/14* (2019.01)   *C02F 3/00* (2023.01)
*C02F 3/02* (2023.01)   *C02F 1/24* (2023.01)
*C02F 3/12* (2023.01)   *C02F 11/16* (2006.01)
*C02F 11/04* (2006.01)

(52) Classification Coopérative des Brevets (CPC):
**C02F 11/04; B01F 33/404; C02F 1/24; C02F 3/006;
C02F 3/02; C02F 11/147;** C02F 3/1215;
C02F 11/16; C02F 2203/006; C02F 2209/001;
C02F 2209/003; C02F 2209/03; C02F 2209/04;
C02F 2209/10; C02F 2209/38;   (Cont.)

(86) Numéro de dépôt international:
**PCT/FR2016/051277**

(87) Numéro de publication internationale:
**WO 2016/193600 (08.12.2016 Gazette 2016/49)**

(54) **PROCEDE ET DISPOSITIF D'EPURATION D'EAUX DOMESTIQUES OU INDUSTRIELLES**

VERFAHREN UND VORRICHTUNG ZUR REINIGUNG HAUS- ODER INDUSTRIEWASSER

METHOD AND DEVICE FOR PURIFYING DOMESTIC OR INDUSTRIAL WATER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.05.2015 FR 1554920**

(43) Date de publication de la demande:
**11.04.2018 Bulletin 2018/15**

(73) Titulaire: **Orege**
**78117 Toussus-le-Noble (FR)**

(72) Inventeurs:
• **CAPEAU, Patrice**
**13013 Marseille (FR)**
• **GENDROT, Pascal**
**78350 Jouy en Josas (FR)**

(74) Mandataire: **Benech, Frédéric**
**Cabinet Benech**
**15, rue d'Astorg**
**75008 Paris (FR)**

(56) Documents cités:
EP-A1- 2 354 096    CN-U- 203 568 959
CN-U- 203 602 470    KR-B1- 101 031 191
US-A- 4 042 493

(52) Classification Coopérative des Brevets (CPC):
(Cont.)
C02F 2209/40; C02F 2209/44; C02F 2303/24;
Y02W 10/10; Y02W 10/30; Y02W 10/37

**Description**

La présente invention concerne un procédé d'épuration en continu d'eaux domestiques ou industrielles utilisant un réacteur biologique permettant l'obtention d'une boue organique épaissie et déshydratée.

Elle concerne également un dispositif d'épuration mettant en oeuvre un tel procédé.

L'invention trouve une application particulièrement importante bien que non exclusive dans le domaine des stations d'épuration des eaux domestiques ou industrielles dans lesquelles on extrait les pollutions organiques des eaux, permettant notamment un épaississement et/ou une réduction importante des volumes de boues issues du traitement.

On connaît déjà des stations d'épuration permettant le rejet dans l'environnement d'eaux traitées par des réacteurs biologiques, c'est à dire des dispositifs permettant par le biais d'un gaz oxydant (air, $O_2$, Ozone...) de séparer la partie liquide des matières solides (MS) tout en faisant baisser la DCO. US4042493 A et EP2354096 Al décrivent par exemple de telles stations d'épuration.

Classiquement ce type de réacteur comprend également un bac décanteur/clarificateur qui récupère en partie basse une boue liquide fortement chargée en MS (4 à 12 g/l) avec une DCO > 300 mg/l et un potentiel redox faible, inférieur à 50mV, voire négatif.

De telles stations présentent des inconvénients. La mauvaise qualité du potentiel redox entraine notamment une mauvaise minéralisation des boues obtenues et dès lors une mauvaise digestion anaérobique ultérieure, si la station comprend en aval un tel digesteur.

La présente invention vise à fournir un procédé et un dispositif répondant mieux que ceux antérieurement connus aux exigences de la pratique, notamment en ce qu'elle va permettre un meilleur fonctionnement des stations d'épuration classiques, qu'elles soient ou non équipées d'un digesteur, en ce qu'elle améliore le temps de séjour dans le réacteur biologique, et de ce fait la clarification des eaux qui en résultera, en ce qu'elle entraîne une meilleure minéralisation des boues et de ce fait une meilleure déshydratation, ce qui autorise donc une production de boues biologiques plus épaissies et déshydratées, avec diminution des bactéries filamenteuses, en ce qu'elle permet d'obtenir un centrat (liquide obtenu lors de la séparation avec les parties solides) en aval du réacteur biologique, présentant un potentiel redox nettement plus élevé ce qui de ce fait va permettre de diminuer la consommation d'électricité en amont dans les besoins d'aération.

L'invention va générer de plus une boue poreuse et à potentiel redox élevé après déshydratation et récupération des centrats, ce qui facilite encore sa déshydratation ultérieure plus poussée.

En particulier et en cas d'utilisation d'un épaississeur statique complémentaire, on obtient une baisse du nombre de réactions de fermentation et une meilleure dégradation des graisses présentes dans les boues.

En cas d'utilisation d'un épaississeur dynamique (centrifugeuse), il va également y avoir une meilleure libération du centrat par flottation, une diminution des sels dans les boues et dès lors, et ici encore, de meilleures possibilités de déshydratation.

Enfin dans le cas de l'utilisation d'un digesteur (avec utilisation de bactéries anaérobies) on va augmenter l'apparition de méthane, tout en augmentant le temps de séjour dans le digesteur, et donc son rendement.

Par ailleurs, du fait de la baisse des charges organiques dans l'eau obtenue avec l'invention, il est de ce fait enregistré une diminution de la DCO des contrats des boues épaissies, avec une meilleure captation des graisses et des mousses issues de la phase biologique, ainsi qu'une baisse de la concentration en sels et une meilleure capacité de déshydratation.

Dans ce but l'invention propose notamment un procédé d'épuration en continu d'un flux d'eaux domestiques ou industrielles dans lequel on traite le flux dans un réacteur biologique par injection d'un gaz oxydant dans ledit réacteur et obtention d'une première séparation entre la partie liquide que l'on évacue et une boue organique que l'on fait décanter en partie basse du réacteur ou d'un séparateur/décanteur adjacent, de sorte que ladite boue comprend entre 4 et 12 g/l de Matières Sèches (MS), caractérisé en ce que, on alimente avec ladite boue en flux continu à un débit q, au travers d'une première restriction, directement ou au travers d'une enceinte dite première enceinte,

une enceinte suivante dite deuxième enceinte en injectant de l'air dans ladite deuxième enceinte à un débit $Q \geq q$, pour obtenir une émulsion de gouttelettes de boue dans l'air,
on crée une perte de charge déterminée dans l'émulsion par une deuxième restriction, pour alimentation d'une enceinte suivante dite troisième enceinte,
on injecte un floculant liquide dans ladite troisième enceinte,
on dégaze ladite émulsion,
on récupère l'émulsion ainsi dégazée dans un bac de récupération situé en aval des moyens de dégazage, de façon à ce que la boue floculée et aérée issue de ladite émulsion ainsi dégazée flotte alors en partie haute du bac, de sorte que le centrat liquide restant récupéré en partie basse du bac, soit chargé en Matières Sèches à un taux inférieur à 100 mg/l et présente un potentiel redox positif d'au moins 50mV et augmenté d'une valeur d'au moins 100mV par rapport à celui de la première boue en entrée de la première enceinte

puis on évacue en continu ou semi-continu ladite boue floculée et on réinjecte le centrat liquide en amont du ou dans le réacteur biologique. Autrement dit l'invention propose notamment un procédé d'épuration en continu d'un flux d'eaux domestiques ou industrielles dans lequel on traite le flux dans un réacteur biologique par injection d'un gaz oxydant dans ledit flux et obtention d'une première séparation entre la partie liquide que l'on évacue et une boue organique que l'on fait décanter en partie basse du réacteur ou d'un séparateur/décanteur adjacent, de sorte que ladite boue comprend entre 4 et 12 g/l de Matières Sèches (MS), caractérisé en ce que, on alimente avec ladite boue en flux continu à un débit q, via une première restriction directement, ou au travers d'une enceinte dite première enceinte, une enceinte suivante dite deuxième enceinte en injectant de l'air dans ladite deuxième enceinte à un débit Q > q, pour obtenir une émulsion,
on crée une perte de charge déterminée dans l'émulsion par une deuxième restriction d'alimentation d'une enceinte suivante dite troisième enceinte,
on injecte un floculant dans ladite troisième enceinte,
on dégaze ladite émulsion,
on récupère l'émulsion ainsi dégazée dans un bac de récupération, de façon à ce que la boue floculée et aérée de ladite émulsion flotte alors en partie haute du bac de sorte que le centrat liquide restant est chargé en Matières Sèches à un taux inférieur à 100 mg/l et présente un potentiel redox positif d'au moins 50mV et augmenté d'une valeur d'au moins 100mV par rapport à celui de la première boue en entrée de la première enceinte
puis on évacue en continu ou semi-continu ladite boue floculée et on réinjecte le centrat en amont du, ou dans le réacteur biologique

Par centrat on entend les eaux séparées des boues obtenues suite au traitement biologique et au système épaississeur formé par les trois enceintes. Les valeurs en mV sont celles lues sur les appareils redox de type classique à électrode à anneau de platine et à référence Ag/AgCl (par exemple un appareil de la société Hach Lange vendu sous la référence E31M003).

A noter que le potentiel d'oxydo-réduction, ou potentiel redox, est une grandeur empirique exprimée en volt (de symbole V) et notée $E°$ (Mn+/M) avec (M) un métal quelconque. Ce potentiel est exprimé par rapport à une différence, souvent mesurée par une électrode normale à hydrogène (ENH). Cette mesure, appliquée aux couples d'oxydo-réduction pour prévoir la réactivité des espèces chimiques entre elles, est en l'espèce mesurée avec l'appareil référencé E31M003 de la société Hach Lange comme indiqué ci-dessus.

Par convention, le potentiel standard $E°$ est mesuré par rapport au couple proton/hydrogène ($H^+/H_2$), de potentiel nul ce qui n'est pas le cas des valeurs exprimées dans le présent texte.

De façon indicative, et si il convenait de se référencer à cette définition standard, + 100mV deviendrait + 300mV.

En introduisant ainsi un centrat en amont du réacteur biologique, on améliore de plus de 5 % jusqu'à 20 % le rendement (% de MV ou taux de matière organique, conversion en matière minérale) de la station qui minéralise donc plus facilement les boues qui vont mieux sédimenter et rendre l'eau de meilleure qualité. De même, avec l'invention on observe que les bactéries filamenteuses sont moins nombreuses ce qui rend la boue plus facile à déshydrater.

Enfin, avec l'invention on retrouve des temps de séjour acceptables et on évite un rejet intempestif de boues dans l'environnement par débordement de la station saturée, ce qui arrive régulièrement dans les stations existantes.

Dans des modes de réalisation avantageux, on a par ailleurs et/ou de plus recours à l'une et/ou à l'autre des dispositions suivantes :

- on régule le taux de concentration en matière sèche de la boue floculée en évacuant la dite boue floculée plus ou moins vite (sans dégrader la qualité du centrat en terme de matière en suspension). Avantageusement et ce faisant, on maintient constants les niveaux de potentiel redox et de MES (Matière en Suspension) dans le centrat (non dégradé) générés ;
- on traite au préalable les eaux domestiques ou industrielles dans une zone de décantation primaire en amont du réacteur biologique, pour séparer physiquement du reste des eaux les éléments de Matière en suspension décantable de taille supérieure à un diamètre équivalent déterminé supérieur à 0,01 mm ;
- on réinjecte le centrat dans une partie septique de la zone de décantation primaire ;
- on transfert et on traite la boue floculée dans un réacteur digesteur alimenté en bactéries anaérobies situé en aval du bac de récupération, et on récupère le méthane (CH4) dégagé du fait de ladite digestion pour stockage et/ou utilisation énergétique ;
- le procédé comprend une étape d'épaississement supplémentaire des boues floculées et aérées ;
- la première enceinte est à une première pression comprise entre 0,2 et 6 bars relatifs, le débit q étant compris entre 5 m3/h et 100 m3/h, la deuxième enceinte est à une deuxième pression comprise entre 0,1 bar et 4 bars relatifs, le débit d'air Q étant compris entre 5 Nm3/h et 1000 Nm3/h, et la troisième enceinte est à une troisième pression comprise entre 0,05 bar et 2 bars relatifs.

Dans le présent texte le Nm$^3$ (Normo-m$^3$) est défini selon les normes internationales en vigueur, c'est à dire comme étant le m$^3$ de gaz mesuré dans les conditions normales de température et de pression. En l'espèce on adopte par exemple la norme DIN1343 c'est à dire des conditions correspondant à une température de 273,15 °K (0°C) et une pression d'1 atm soit 101 325 Pa ;

- on alimente une enceinte intermédiaire entre les deuxième et troisième enceintes ;
- on injecte une deuxième fois de l'air en aval de la première injection dans une enceinte intermédiaire située entre la deuxième et la troisième enceinte ;
- les première, et deuxième restrictions sont formées par des venturis ;
- la deuxième enceinte est une colonne de diamètre moyen d et de hauteur H $\geq$ 10 d ;
- le floculant est un polymère injecté en sortie immédiate de la deuxième ou troisième restriction.

L'invention propose également un dispositif mettant en oeuvre le procédé décrit ci-dessus.
Elle concerne aussi un dispositif apte à l'épuration en continu d'un flux d'eaux domestiques ou industrielles comprenant

- un réacteur biologique de traitement du flux
- des moyens d'injection d'un gaz oxydant dans ledit réacteur,
- des moyens de décantation de ladite boue, en partie basse du réacteur ou d'un séparateur/décanteur adjacent, lesdits moyens étant agencés pour effectuer une première séparation entre la partie liquide que l'on évacue et une boue organique comprenant entre 4 et 12 g/l de Matières Sèches (MS),
Ledit dispositif étant caractérisé en ce que, il comprend de plus et en aval du réacteur
- optionnellement une première enceinte ;
- une enceinte suivante dite deuxième enceinte ;
- une enceinte suivante dite troisième enceinte ;
- des moyens d'alimentation de ladite deuxième enceinte avec ladite boue en flux continu à un débit q au travers d'une première restriction, directement ou au travers de ladite première enceinte, des moyens d'injection d'air dans ladite deuxième enceinte à un débit Q $\geq$ q, pour obtenir une émulsion de gouttelettes de boue dans l'air, une deuxième restriction agencée pour créer une perte de charge déterminée dans l'émulsion lors du passage vers ladite troisième enceinte,
- des moyens d'injection d'un liquide floculant dans ladite troisième enceinte, des moyens de dégazage de ladite émulsion,
- un bac de récupération (de l'émulsion ainsi dégazée situé en aval des moyens de dégazage,
- des moyens de récupération de la boue floculée et aérée issue de ladite émulsion ainsi dégazée en partie haute du bac ;
- des moyens d'évacuation en continu ou semi-continu de ladite boue floculée ;
- des moyens de récupération du centrat liquide restant en partie basse du bac ;
- et des moyens de réinjection du centrat liquide dans et/ou en amont du réacteur biologique ;

le dispositif permettant d'obtenir ledit centrat liquide chargé en Matières Sèches à un taux inférieur à 100 mg/l et présentant un potentiel redox positif d'au moins 50mV et augmenté d'une valeur d'au moins 100mV, par rapport à celui de la boue en entrée des enceintes.
Autrement dit elle concerne également un dispositif apte à l'épuration en continu d'un flux d'eaux domestiques ou industrielles comprenant

un réacteur biologique de traitement du flux avec injection d'un gaz oxydant dans ledit flux, agencé pour effectuer une première séparation entre la partie liquide que l'on évacue et une boue organique,
des moyens de décantation de ladite boue, en partie basse du réacteur ou d'un séparateur/décanteur adjacent, lesdits moyens étant agencés pour que ladite boue comprenne entre 4 et 12 g/l de Matières Sèches (MS),
caractérisé en ce que, le dispositif comprend de plus des moyens d'alimentation avec ladite boue en flux continu à un débit q, via une première restriction, directement ou en série avec une enceinte dite première enceinte, d'une enceinte suivante dite deuxième enceinte,
lesdites première et/ou deuxième enceintes,
des moyens d'injection d'air dans ladite deuxième enceinte à un débit Q > q, pour obtenir une émulsion, une deuxième restriction agencée pour créer une perte de charge déterminée dans l'émulsion pour alimentation d'une enceinte suivante dite troisième enceinte, ladite troisième enceinte, des moyens d'injection d'un floculant dans ladite troisième enceinte,
des moyens de dégazage de ladite émulsion,
un bac de récupération de l'émulsion ainsi dégazée, des moyens de récupération de la boue floculée et aérée de ladite émulsion en partie haute du bac,
des moyens de récupération du centrat liquide restant agencé pour obtenir ledit centrat liquide chargé en Matières Sèches à un taux inférieur à 100 mg/l et présentant un potentiel redox positif d'au moins 50mV et augmenté d'une valeur d'au moins 100mV, par rapport à celui de la boue en entrée des enceintes,
des moyens d'évacuation en continu ou semi-continu de ladite boue floculée et des moyens de réinjection du centrât dans et/ou en amont du réacteur biologique.

Avantageusement l'injection dans le flux du gaz oxydant s'effectue avant qu'une suspension concentrée de 4 à 12g/l de matière sèche (MS), constituée essentiellement de résidus bactériens, ne sédimente en laissant en surverse une partie liquide que l'on évacue et que ladite suspension organique ou boue décantée en partie basse du réacteur ou du séparateur décanteur adjacent, de sorte que ladite suspension ou boue comprend entre 4 g et 12 g/l.

Egalement avantageusement le dispositif comprend de plus une enceinte intermédiaire entre les deuxième et troisième enceintes et des moyens d'injection d'air en aval de la première injection dans ladite enceinte intermédiaire.

Dans un mode de réalisation avantageux les première et deuxième restrictions sont formées par des venturis.

Egalement avantageusement la deuxième enceinte est une colonne de diamètre moyen d et de hauteur $H \geq 10\,d$.

L'invention sera mieux comprise à la lecture de la description qui suit de modes de réalisation donnés ci-après à titre d'exemples non limitatifs. La description se réfère aux dessins qui l'accompagnent dans lesquels :
La figure 1 est un schéma de fonctionnement d'un premier mode de réalisation d'un dispositif mettant en oeuvre le procédé selon l'invention. Les figures 2 à 4 montrent schématiquement des modes de réalisation de systèmes épaississeurs utilisables avec l'invention.

La figure 5 est un graphe montrant les débits des boues purgées du séparateur/décanteur d'un réacteur biologique sans l'invention, et avec l'invention.

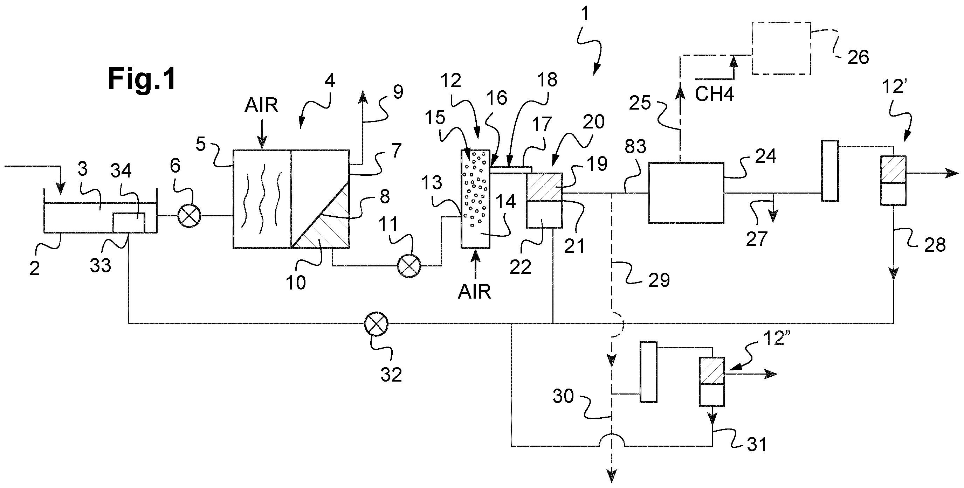

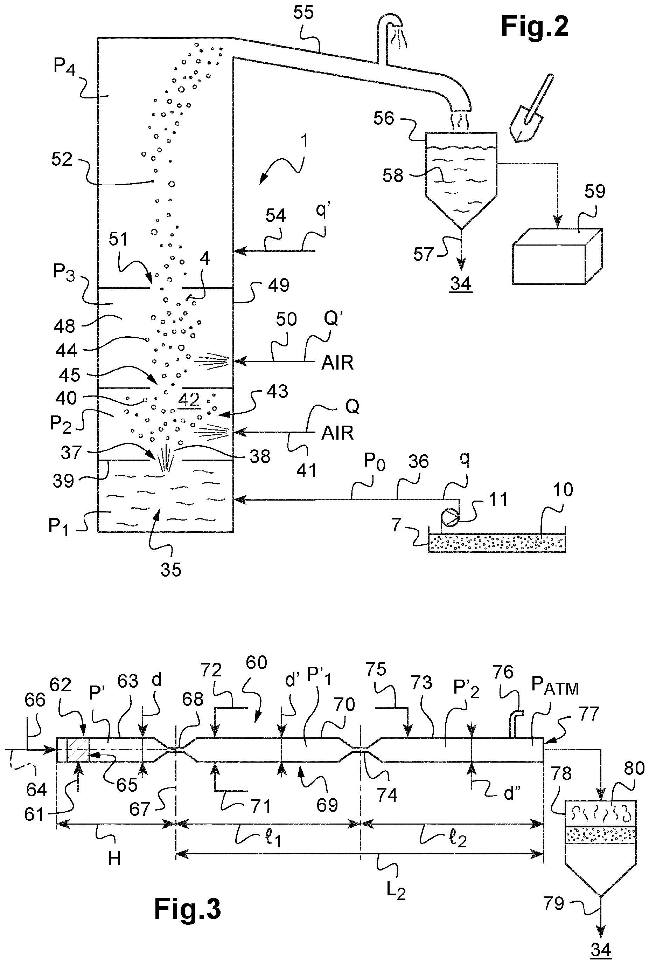

La figure 1 montre un dispositif 1 d'épuration comprenant un décanteur primaire 2 (par exemple un bassin) d'eaux usées 3, un réacteur biologique 4 connu en lui-même muni d'une section biologique 5 alimenté via une pompe 6 à partir du décanteur 2 et d'une section 7 décanteur/clarificateur, munie d'une grille de séparation 8. L'eau obtenue est évacuée en 9 (par exemple vers une rivière) et la boue décantée 10 est pompée en 11 vers le système épaississeur 12, qui sera également décrit plus particulièrement en référence à la figure 2.

Le système 12 comprend une première restriction 13, une deuxième enceinte 14 alimentée en air pour former une émulsion 15, une deuxième restriction 16 et une troisième enceinte 17 par exemple en forme de tube muni de moyens 18 d'injection d'un floculant.

L'émulsion ainsi floculée et aérée 19 est récupérée en partie haute 20, d'un bac 21 de récupération de sorte que le centrat 22 liquide est chargé en matière sèche à un taux inférieur à 100mg/l et présente un potentiel redox supérieur à 100mV.

Un tel résultat est obtenu grâce à la succession d'au moins deux restrictions, d'au moins une alimentation en air et de l'injection adéquate de floculant aux emplacements adéquats, et ce avantageusement en respectant les rapports de débits encore précisés par exemple ci-après mais de façon non limitative en référence à la figure 2.

A noter également que de simples ajustages à la portée de l'homme du métier compte tenu des paramètres liés aux eaux traitées, aux dimensions des enceintes, et aux quantités d'air et de floculant injectés, sont mis en oeuvre pour obtenir un tel résultat.

On évacue ensuite en 23 la boue floculée en continu ou semi-continu (par raclage ou vidange régulière de la boue accumulée en 20) dans un réacteur/digesteur 24 connu en lui-même, alimenté en bactéries anaérobies. Des moyens de récupération (pompe aspirant par exemple) en 25 sont prévus, le gaz méthane CH4 étant réutilisable pour créer de l'électricité dans une installation 26 connue en elle-même.

La boue ainsi digérée est récupérée en 27 pour épandage et/ou toute autre utilisation. Elle peut aussi être traitée à nouveau par un système 12' d'épaississement du type du système 12, le centrat étant récupéré en 28.

De même, le digesteur 24 peut ne pas être présent, auquel cas la boue floculée est évacuée en 29 soit pour une utilisation autre (flèche 30) soit vers un système 12" du type des systèmes 12, 12', avec centrat récupéré en 31.

Selon l'invention les centrats récupérés en aval des systèmes 12, 12' et/ou 12" sont réinjectés via une pompe 32 en amont du réacteur biologique 4, avantageusement en 33 dans une zone septique 34 du décanteur primaire 2. On observe alors que cette réinjection augmente de façon significative la performance du procédé d'épuration.

Par augmenter la performance on entend une augmentation du temps de séjour dans le réacteur, une augmentation du potentiel d'oxydation (potentiel redox) et une meilleure minéralisation, et ce pour des eaux identiques à traiter.

La figure 2 montre plus précisément un système 12 d'épaississement des boues liquides 10 par exemple pompées par la pompe 11 à partir de la section 7 de stockage des boues à forte teneur organique selon un mode de réalisation de l'invention.

Le système 12 comprend une première enceinte 35 de petit volume par exemple cylindrique ou cubique, par exemple de volume 10 l, de réception de la boue liquide, par exemple à une première pression déterminée $P_1$ un peu

inférieure à la pression $P_0$ de sortie de la pompe d'alimentation 11, du fait des pertes de charges du circuit d'alimentation 36 (tube flexible par exemple). Le débit q de la pompe est par exemple compris entre 5 m$^3$/h et 50 m$^3$/h par exemple 10 m$^3$/h, et la première pression déterminée $P_1$ est de 2 bars absolus, $P_0$ étant par exemple de 2,2 bars absolus.

L'enceinte 35 comprend à sa sortie une restriction 37, par exemple formée par un orifice ou ajutage 38, rond, par exemple de diamètre 2 cm, dans une paroi intermédiaire 39, de séparation avec une deuxième enceinte 40, de plus grand volume, par exemple 200 l.

La deuxième enceinte 40, par exemple cylindrique est à une deuxième pression $P_2$ (par exemple 1,8 bar absolu) et est alimentée par exemple en partie basse par de l'air 41 à très fort débit Q = 500 Nm$^3$/h, et une pression de plusieurs bars, par exemple 5 bars créant dans la chambre 42 formée par l'enceinte une émulsion 43 de gouttelettes de boue 44 qui s'évacue par l'intermédiaire d'une deuxième restriction 45 similaire ou identique à la restriction 37.

L'injection d'air dans l'émulsion juste après l'introduction de la boue dans la chambre, facilite le mélange qui se fait dans la partie en accélération après l'ajutage (effet éjecteur à air).

La deuxième restriction 45 débouche sur une enceinte intermédiaire 48, par exemple de volume plus important, par exemple 500 l, formé par un cylindre 49 dont l'intérieur est à une troisième pression $P_3$, par exemple de 1,6 bars absolu.

Une deuxième injection d'air 50 en partie basse de cette enceinte intermédiaire augmente encore la parcellisation ou dilution de la boue dans l'air, l'injection se faisant par exemple à un débit Q' de 200 Nm$^3$/h, avec par exemple 50 Nm3/h < Q' $\leq$ Q.

L'enceinte intermédiaire 48 alimente quant à elle et dans le mode de réalisation décrit ici, via une troisième restriction ou ajutage 51, une troisième enceinte 52, également cylindrique, par exemple de hauteur 3 m, à une quatrième pression $P_4$ décroissante de l'entrée de l'enceinte en 53 à 1,2 bars jusqu'à la pression atmosphérique en partie haute.

La quatrième enceinte comprend une alimentation en floculant 54 (par exemple un polymère connu) à un débit q', par exemple fonction du type et du débit de boue, qui pourra être apprécié par l'homme du métier de façon connue en elle-même pour obtenir une bonne floculation.

Les boues s'évacuent ensuite par exemple gravitairement via une tubulure 55 éventée dans un sac filtrant 56, l'eau épurée 57 étant évacuée vers le bas et la boue épaissie étant quant à elle récupérée par exemple par pelletage pour constituer des blocs épaissis 59, par exemple d'un facteur 20 par rapport à la boue liquide 2 en entrée (τ de MS multiplié par 10 avant égouttage dans le sac filtrant).

Selon l'invention l'eau épurée ou centrat 57 est renvoyée en tête de traitement en amont du réacteur biologique par exemple dans la zone septique 34.

La figure 3 montre un autre mode de réalisation d'un dispositif 60 d'épaississement de boues liquides 61 introduites à une portion d'extrémité 62 d'un récipient 63 allongé autour d'un axe 64 et de hauteur H déterminée, par exemple 1 m.

Le récipient est maintenu à une pression moyenne P' par exemple de 2 bars absolus, et est formé par un cylindre de diamètre d par exemple de 150 mm.

La boue alimente une zone réduite 65, par exemple de 10 l située à la portion d'extrémité 62 également alimentée au bout du récipient et en amont de l'introduction de la boue par une arrivée d'air 66 par exemple à une pression P" > P', par exemple 2 bars absolus.

L'air est alimenté à très fort débit Q' par exemple 100 Nm$^3$/h, la boue étant quant à elle introduite à un débit Q par exemple de 10 m$^3$/h.

La boue 61 éclate dans l'air qui est en surpression, une légère dépression $\Delta$P existant entre le récipient à l'arrivée de la boue en 65 et la sortie de l'émulsion de boue en aval 67 du récipient.

A la sortie du récipient 63 existe un venturi 68 et/ou une vanne de régulation générant une perte de charge par exemple de 0,4 bar, l'émulsion de boue étant ici évacuée dans une enceinte tubulaire 69 comprenant une première partie 70 cylindrique de diamètre d' (par exemple d' = d) qui se trouve à une pression $P'_1$ < P', par exemple ici de 1,6 bars (dans l'exemple pris), dans laquelle peut être injecté, en aval du venturi, et à proximité de celui-ci (par exemple à 10 cm pour permettre un bon brassage), un réactif en 71, et/ou à nouveau de l'air (piquage 72).

Dans ce mode de réalisation, l'enceinte tubulaire comprend également une deuxième partie cylindrique 73, séparée de la première partie 70 par un deuxième venturi 74, ladite deuxième partie étant de diamètre d" avec par exemple d' = d" = d.

En aval du venturi 74, et à proximité de celui-ci (1 à 10 cm) est prévu une alimentation 75 en floculant, avec des moyens connus en eux-mêmes (pompe doseuse etc...), et un évent 76 de mise à l'atmosphère et/ou une sortie 77 de boue ouverte à l'atmosphère, la pression $P'_2$ dans cette deuxième partie étant donc très rapidement portée à la pression atmosphérique , par exemple de 1,3 bar à la sortie du venturi pour passer rapidement à 1 bars = 1 atmosphère à la sortie 77, l'émulsion devenant après l'ajout du floculant une émulsion d'air dans les flocons de boues, qui s'écoulent gravitairement sur la fin.

La longueur totale de l'enceinte $L_2 \approx l_1 + l_2$, est par exemple de 10 m, avec $l_1$ = 3 m et $l_2$ = 7 m, mais d'autres valeurs sont possibles, la proportion entre $l_1$ et $l_2$ étant en général, mais non limitativement telle que $l_1 < l_2$.

Le dispositif 70 comprend de plus un filtre 78 et/ou un bac de décantation pour évacuation de l'eau épurée 79 en partie basse vers la zone 34 en amont ou dans le réacteur biologique et de la boue déshydratée 80 en partie haute.

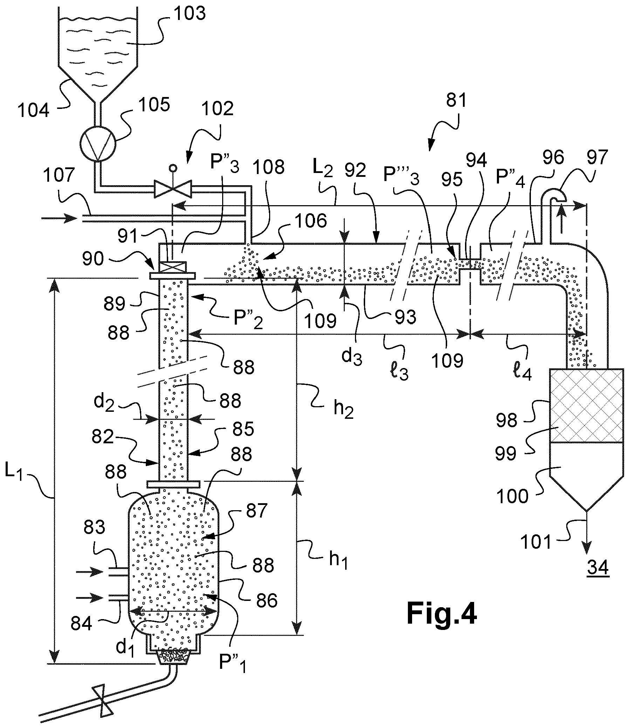

On a représenté sur la figure 4 un troisième mode de réalisation d'un système 81 selon l'invention.

Le système 81 comprend un récipient 82 alimenté par un piquage 83 en partie basse, en boue liquide, et en dessous de ce piquage 83, alimenté en air comprimé à fort débit par un deuxième piquage 84.

Plus précisément le récipient est formé par une colonne verticale 85 comprenant une première partie formant un réservoir 86 de mélange/brassage très violent de l'air et de la boue, de petites dimensions par exemple cylindrique de hauteur $h_1$ = 50 cm et de diamètre $d_1$ 30 cm soit un volume de l'ordre de 35 l, permettant d'obtenir la première émulsion 87 de gouttelettes 88 de boue cassée.

Cette émulsion de gouttes dans un fort flux ascendant d'air en pression pénètre ensuite dans une conduite cylindrique 89, prolongeant le réservoir 86, de plus petit diamètre $d_2 < d_1$ par exemple de 10 cm de diamètre et qui s'étend sur une longueur $h_2$ par exemple de 1 m (avec $L_1 = h_1 + h_2$).

Dans cette colonne d'air, le flux gazeux effectue un arrachage (stripping en langue anglo-saxonne) des gaz contenus et/ou issus des boues et notamment de l'ammoniac NH3, réalisant de façon étonnante et dépendante des conditions de fonctionnement et des boues organiques traitées, une élimination quasi complète des gaz indésirables (< quelques ppm) piégés dans les boues.

La longueur $l_2$ est avantageusement dimensionnée pour ce faire par l'homme du métier.

En haut 90 de l'enceinte, une vanne 91 de régulation et/ou une soupape est prévue, d'évacuation vers une enceinte tubulaire 92.

La pression de l'émulsion 87 passe de $P_1"$ (par exemple 3 bars) dans le réservoir initial 86, à $P_2"$ (2,890 bars) un peu inférieure à $P_1$ en partie haute de la colonne 89 du récipient, au niveau de la vanne 91, avec $\Delta P" = P_2" - P_1" =$ quelques millibars, puis à la sortie de la vanne à $P_3" = 2$ bars (du fait de la perte de charge de la vanne).

Plus précisément l'enceinte 92 comprend un premier tronçon 93 de longueur $l_3$ par exemple 5 m, qui se termine par un venturi 94 faisant passer la pression $P_3''' < P_3"$ à l'extrémité 95 du premier tronçon à une pression $P_4"$ dans un deuxième tronçon 96 de l'enceinte en pente granitaire, muni d'un évent 97, le tronçon 96 étant de longueur $l_4$ par exemple 1 m, avec $L_2 = l_3 + l_4$.

Le tronçon 96 est connecté au filtre 98 de séparation des matières en suspension 99 de la partie liquide 100, que l'on vide en continu en 101, pour la réinjecter dans la zone 34.

L'enceinte comprend des moyens 102 d'alimentation en floculant 103 à partir d'un réservoir 104 de préparation par brassage et mélange. Une pompe doseuse 105 amène le floculant dans l'émulsion de boue qui sort du récipient 82 au niveau de la sortie de la vanne 91, ou à proximité immédiate (i.e. quelques cm) dans une zone 106 assez perturbée du fait de la perte de charge générée par ladite vanne 91. $P_3"$ est ici et par exemple passé de $P_2" \approx 2$ bars à $P_3" = 1,4$ bar, $P_4"$ étant quant à elle à la pression atmosphérique, ou sensiblement à la pression atmosphérique du fait de l'évent 97.

Dans ce mode de réalisation, il a également été prévu une arrivée d'air complémentaire 107, injectée par exemple avec le floculant par le piquage 108, ou en parallèle.

L'émulsion 109 à la sortie du traitement avec le floculant devient une émulsion d'air dans la boue floculée épaissie.

Les deux tronçons 93 et 96 sont par exemple cylindrique de même diamètre $d_3$ par exemple égal au diamètre

$$\frac{d1 + d2}{2}$$

moyen du récipient par exemple .

Pour 10 m³/h de boue liquide, un flux d'air de 60 Nm³/h minimum, et ce quelque que soit le mode d'injection, le récipient présentant une section de 200 mm pour une hauteur de 5 m, 10 m, 30 m ou plus, on observe un effet de stripping (en langue anglo-saxonne) (arrachage des gaz piégés) très fort, l'air étant intimement mêlé à la boue.

Concernant le floculant, on utilisera de préférence un polymère par exemple cationique.

Exemple, pour une boue contenant 7g/l de MS, on utilise 50 g de polymère brut, par exemple préparé à 5g/l soit une injection de 10 l de solution par m³ de boue. L'injection s'effectue en sortie immédiate de la colonne du récipient.

En variante, on peut ajouter un réactif améliorant les chocs entre les particules de boues. Il peut par exemple être utilisé à hauteur de 10 %, 5 %, 1 % du taux de MS des boues, comme vu précédemment.

Ce réactif est par exemple du sable, du carbonate de calcium, de la chaux éteinte etc... Il est introduit en amont de la colonne par exemple au sein d'une cuve de mélange avec la boue liquide (non représenté).

Il peut également être apporté des réactifs d'oxydations.

Dans certaines applications, par exemple lorsque les boues contiennent beaucoup d'acides gras organiques ou que ces boues sont des boues issues de méthaniseur, on observe en effet d'excellents résultats.

Par exemple dans des proportions de 1 l de H2O2 ou 1 l de S2o8 pour 1 m³ de boue contenant 40 g/l de MS.

Il peut également y avoir apport de réactif d'aide à la coagulation des matières organiques complémentaires.

Par exemple, pour une boue de 11 g/l de MS et 8% de MV (Matière Volatile soit matière organique / matière sèche) (environ matière organique/ matière sèche (?)) et pour 500 ml de boue, il est apporté 1 ml de FeCl3 (solution à 10%) soit à l'introduction du liquide dans la colonne, soit avant l'introduction de floculant (après colonne).

A titre d'exemple il a été réalisé des tests sur boue biologique avec filtre bande, à partir de boues chargées de 26 à 30 g/l en MS avec :

Q' = 50 à 80 Nm3/h
P = 1,7 bar de pression du récipient/réacteur
Q = 3 à 15 m3/h
A la sortie du procédé on obtient des boues à l'aspect poreux, secs, avec un séchage accéléré et une siccité de 25 à 35%.

On observe ainsi que, de façon étonnante et par simple décantation, l'eau permet à son eau déliée de s'évacuer directement gravitairement et à un fort potentiel redox > 100 mV.

La boue s'assèche alors progressivement, passant de 100 g/l de MS après la 1ère heure, à 130 g/l après 2 h, 160 g/l après 5 h, 350 g/l après 1 mois. (big bag) .

D'autres exemples de traitement suivant le procédé mis en oeuvre, par récupération sur benne filtrante ou sacs filtrants (big bag en langue anglo-saxonne) donnent :

Benne filtrante ; Ex 2 : 130 g/l après 20h et 180 g/l après 8 j
Benne filtrante ; Ex 3 : 100 g/l après 5 h, 130 g/l après 7 j.
Big bag ; Ex 4 : 100 g/l après 24h, 115 g/l après 7j et 221 g/l après 1 mois.
Big bag ; Ex 5 : 144 g/l après 24h, 154 g/l après 7j et 459 g/l après 1 mois.
Big bag ; Ex 4 : 120 g/l après 24h (alors qu'il a plu toute la nuit) et 402 g/l après 1 mois.

A noter que la boue traitée avec l'invention est au départ liquide en aval du réacteur biologique et agencée pour, après passage par le réacteur pour présenter une concentration en MS de 4 à 12 g/l.

Jusque 12 g/l une dilution n'est a priori pas requise. Si la boue est très dense, par exemple au-delà de 40 g/l, en amont du réacteur on peut procéder à une dilution en entrée pour permettre un bon fonctionnement du pompage de la boue, qui est rappelons-le une boue organique, c'est à dire dont le taux de MO (Matière Organique) sur le taux de MS (Matière en Suspension) se situe entre 65 % et 85 %. Par Matière Organique on entend essentiellement des phospholipides, polysaccharides, protéines, alcalins, alcalino terreux et/ou métaux etc....

On a donné ci-après un autre exemple de fonctionnement, cette fois en référence à la figure 3 simplifiée (on s'affranchit de la première portion d'enceinte).

Le récipient 63 forme une première chambre en forme de tuyau de 20 cm de diamètre et de 50 cm de longueur, dans laquelle on introduit au débit Q = 10 m3/h, une boue organique (issue du clarificateur du réacteur biologique d'une station d'épuration communale par exemple) à 6 g/l de MS et de l'air comprimé à 50 Nm3/h d'air à 1,9 bar grâce à un surpresseur.
Un orifice de 5 cm2 ferme cette chambre sur une longueur de 10 cm.
En aval immédiat de celui-ci, on introduit dans l'enceinte 63 un floculant par exemple dosé à 10 g/l.

La pression post orifice chute progressivement pour arriver à l'atmosphère après quelques mètres. Par exemple : l'enceinte 63 qui forme une chambre post orifice est aussi un tuyau de 3 m de longueur et 20 cm de diamètre.

A l'extrémité de l'enceinte, l'ensemble des flux rejoint par exemple une poche filtrante (filtre 80) au seuil de coupure de 500 um donnant immédiatement une siccité de 10% (ou 100 g/l) et un filtrat clair en 79 de 50 mg d'oxygène (O2) par litre (DCO).

Les réactifs sont introduits liquides par des pompes doseuses. Classiquement, plus les boues sont concentrées plus les réactifs doivent être préparés dilués.
La sortie du dispositif s'effectue à l'atmosphère. Mais la mise à l'atmosphère peut éventuellement être régulée dans un mode de réalisation de l'invention, de façon à récupérer la pression de l'appareil de séparation aval.
A la sortie, les boues peuvent bien évidemment être utilisées en épandage sur le sol, sans ou après compostage, seules ou avec des déchets verts ou autres. Elles peuvent aussi être séchées sur des lits de séchages simples ou solaires.
Le centrat est quant à lui renvoyé en tête comme indiqué ci-avant dans l'invention.

On remarque que curieusement, les boues obtenues sont « non odorantes » et ne fermentent pas avec le temps (fermentation anaérobie)

En fait, la bonne dilution avec l'air permet aux boues de posséder un pouvoir de déshydratation élevé, dû à la présence des bulles d'air.

On observe que grâce à une concentration des boues optimisée, obtenue avec l'invention, celle-ci va très favorablement maximiser la fonction de déshydratation, permettant d'obtenir une eau déliée de forte résistivité, grâce au procédé décrit ci-avant, ce qui permet lorsqu'elle est réinjectée en amont d'obtenir un meilleur rendement.
Comme indiqué ci-avant le dispositif et le procédé décrits permettent d'améliorer le rendement d'une station d'épuration en produisant des boues plus facilement déshydratables, par exemple plus concentrées de 30 g/l de MS pour un appareil d'épaississement ou de déshydratation donné.

Avec l'invention on constate en effet que :

Grâce à la faible charge en MS recirculante et grâce à l'aide à l'oxydation obtenue du fait de l'élévation du redox ou de la saturation en O2 de l'eau extraite des boues, la charge moyenne des bassins de traitement biologique diminue.

Cela permet d'augmenter alors le temps de présence dans ces bassins pour une concentration MS fixée, et par conséquent d'améliorer le procédé de minéralisation des boues et donc leur faculté à sédimenter ou à être déshydratées (ce sont les colloïdes organiques qui piègent l'eau au sein de flocs très hydratés).

Il est alors possible d'éviter les phénomènes de départ de boue dans les eaux de surverses des bassins clarificateurs.

De la même manière l'apport de redox positif est supérieur à 100 mV.

A noter que les boues classiques sorties de clarification ont en général un redox de - 50 mV environ.

On observe donc avec l'invention un écart supérieur à 100mV, voire supérieur à 150 mV.

On remarque par ailleurs que l'apport de centrat avec un tel redox dans les zones septiques de la station permet d'éviter et/ou d'endiguer considérablement la prolifération de bactéries filamenteuses.

Ce sont celles-ci qui font obstacle à la bonne décantation des boues dans les bassins de clarification, mais aussi dans les bassins de décantations souvent encore utilisés pour épaissir les boues avant déshydratation ou digestion.

Lorsque la boue biologique passe de plus par une étape de digestion, on observe alors une augmentation de la déshydratation, ce qui conduit à une boue plus sèche en entrée de digesteur et donc à un débit hydraulique inférieur et par conséquent un temps de séjour accru.

Il y a de ce fait une production plus importante de biogaz (CH4) et une minéralisation accrue des boues facilitant à nouveau l'extraction de l'eau dans de bonnes conditions, et donc un meilleur centrat (MES) en retour en tête ainsi qu'une siccité augmentée, baissant directement la aussi les charges d'exploitations liées à l'élimination des boues. Enfin, la porosité forte des boues obtenu avec l'invention leur confère une très faible viscosité ce qui garantit un excellent mélange dans le digesteur et donc une homogénéité des températures et une baisse de la consommation électrique liée au mélange au sein des digesteurs. Ces points permettent ainsi d'augmenter le rendement de l'ensemble de l'unité de traitement.

On a également pu observer que la porosité des boues est telle que la vitesse ascensionnelle dans l'eau est au minimum de 25 m/h.

Par ailleurs une augmentation de la siccité de 30 g/l a un impact sur le temps de séjour de 15% dans un digesteur situé en aval ... ce qui laisse plus de temps pour produire du CH4 à partir des substances organiques et pour les minéraliser.

On a, à titre d'exemple non limitatif, reproduit ci-après (tableau I) les résultats obtenus avec le procédé selon l'invention.

Ce tableau illustre l'effet immédiat du dispositif de traitement avec retour en tête tel que décrit en référence aux figures 1 et 2. On voit que le potentiel redox du centrat en sortie est toujours supérieur à 50 mV et que la différence entre l'entrée et la sortie toujours supérieure à + 100mV.

Tableau I

| Date | Entrée | | Epaissis | Centrat |
|---|---|---|---|---|
| | E | MS Entrée | MS Sortie | E |
| | mV | g/L | g/L | mV |
| 24/12/2014 | -85,00 | 5,29 | 70, 23 | 113,50 |
| 02/01/2015 | -119, 60 | 6,13 | 66, 39 | 74,40 |
| 07/01/2015 | -88,40 | 5,06 | 71,37 | 94,40 |
| 07/01/2015 | -79,60 | 5,16 | 67,79 | 93,80 |
| 14/01/2015 | -48,80 | 6, 02 | 64, 69 | 103,20 |
| 15/01/2015 | -103,30 | 5, 70 | 56, 00 | 82,30 |
| 28/01/2015 | -108,00 | 5, 32 | 75,40 | 92,70 |
| 28/01/2015 | -15,40 | 6,20 | 68, 72 | 103,00 |

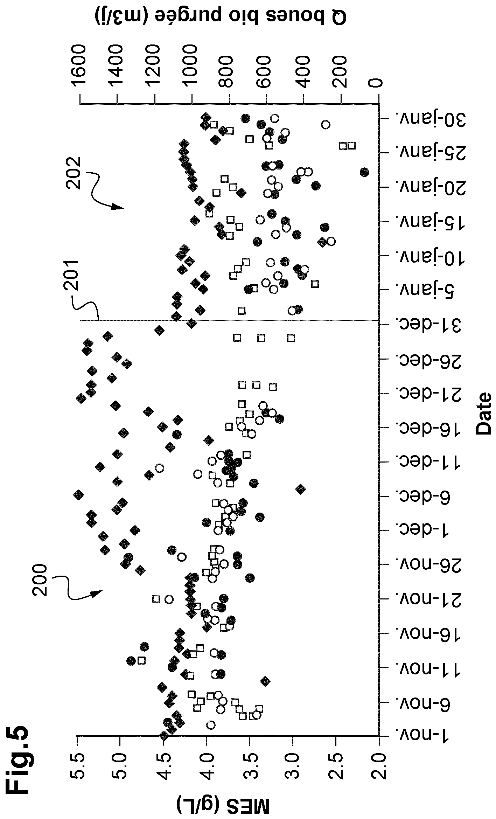

La figure 5 illustre l'impact de l'invention sur la charge des bassins (séparateur/décanteur) d'un réacteur biologique d'une installation d'épuration existante classique d'eaux domestiques.

Les ronds représentent les charges ou concentration en boue des bassins (poids MS/Volume) ou MES, dont les valeurs (en g/l) figurent en ordonnée sur la partie gauche du graphe, et ce pour les jours figurant en abscisse.

Les losanges représentent les débits d'évacuation des boues (décharges) journalière, dont les valeurs figurent en ordonnée en m³/j, sur la partie droite du graphe.

Celui-ci se divise en deux zones.

Une première zone 200 sans mise en oeuvre de l'invention séparée (trait vertical 201) d'une deuxième zone 202, avec mise en oeuvre de l'invention (installation du type décrite en référence aux figures 1 et 2).

On constate (voir zone 202) que grâce à l'invention, on maintient une charge inférieure à 4 g/l tout en purgeant à des débits réguliers en général inférieur à 1 100 m³/j.

A l'inverse (voir zone 200) les charges sont régulièrement au-dessus de 4 g/l avec visiblement des pointes autour de 5 g/l et donc des risques de rejets des boues dans l'environnement, et que le débit de décharge ou purge est quasiment systématiquement au-dessus de 1 200 m³/j et en moyenne essentiellement au-dessus de 1 400 m³/j voire 1 600 m³/j.

Ce graphe illustre donc qu'avec l'invention on observe une baisse significative de la charge dans les bassins et donc une baisse importante du besoin de purge des boues par l'exploitant.

Celui-ci doit en effet purger pour ne pas avoir un voile de boue trop haut et des risques de départs de boue dans l'eau sortie de station.

Le tableau II illustre quant à lui l'augmentation significative du rendement de la digestion avec l'invention (dans le cas où la station comprend un tel digesteur).

On y constate en effet qu'il y a plus d'inertie et surtout que 100 % de la boue produite pendant 1 mois est allée dans le digesteur.

Les AGV (Acides Gras Volatiles) baissent de plus significativement, ce qui démontre également le meilleur rendement de la station. Ce sont en effet des intermédiaires réactionnels et leur baisse montre que la digestion est plus complète.

Ce sont également des acides qui acidifient le milieu et bloquent une partie du processus de digestion. Leur taux moindre est ainsi un révélateur significatif de l'amélioration obtenue avec l'invention.

Tableau II

| Date | AGV | Rdt |
|---|---|---|
|  | g/L | %MV |
| 01/09/2014 | 0,32 | 48,97 |
| 02/09/2014 | 0,33 | 42,19 |
| 03/09/2014 | 0,29 | 45,32 |
| 12/09/2014 | 0,28 | 49,02 |
| 13/09/2014 | 0,29 | 51,69 |
| 14/09/2014 | 0,29 | 54,04 |
| 28/09/2014 | 0,30 | 53,31 |
| 29/09/2014 | 0,30 | 51,53 |
| 30/09/2014 | 0,32 | 55,72 |
| 14/10/2014 | 0,36 | 50,58 |
| 15/10/2014 | 0,35 | 52,67 |
| 16/10/2014 | 0,34 | 48,54 |
| 20/12/2014 | 0,31 | 52,28 |
| 21/12/2014 | 0,30 | 52,43 |
| 22/12/2014 | 0,30 | 53,42 |
| 05/01/2015 | 0,28 | 59,33 |
| 06/01/2015 | 0,26 | 53,93 |
| 07/01/2015 | 0,27 | 57,07 |

(suite)

| Date | AGV | Rdt |
|---|---|---|
| | g/L | %MV |
| 16/01/2015 | 0,26 | 51,89 |
| 17/01/2015 | 0,26 | 57,38 |
| 18/01/2015 | 0,26 | 55,50 |
| 19/01/2015 | 0,26 | 59,01 |
| 20/01/2015 | 0,26 | 60,07 |
| 21/01/2015 | 0,26 | 63, 66 |
| 22/01/2015 | 0,26 | 64,67 |
| 23/01/2015 | 0,26 | 64,03 |
| 24/01/2015 | 0,26 | 64,06 |
| 25/01/2015 | 0,26 | 64,79 |
| 26/01/2015 | 0,26 | 63,29 |
| 27/01/2015 | 0,26 | 59,47 |
| 28/01/2015 | 0,26 | 57,81 |
| 09/02/2015 | 0,23 | 58, 65 |
| 10/02/2015 | 0,23 | 56,46 |
| 11/02/2015 | 0,22 | 60, 66 |
| 21/02/2015 | 0,2 | 59, 77 |
| 22/02/2015 | 0,2 | 61, 69 |
| 23/02/2015 | 0, 2 | 59,13 |
| 17/03/2015 | 0,19 | 62,22 |
| 18/03/2015 | 0,18 | 55,51 |
| 19/03/2015 | 0,18 | 61,06 |

**Revendications**

1. Procédé d'épuration en continu d'un flux d'eaux domestiques ou industrielles (3) dans lequel on traite le flux dans un réacteur biologique (4, 69, 82) par injection d'un gaz oxydant dans ledit réacteur et obtention d'une première séparation entre la partie liquide (9) que l'on évacue et une boue organique (10) que l'on fait décanter en partie basse du réacteur ou d'un séparateur/décanteur adjacent, de sorte que ladite boue comprend entre 4 et 12 g/l de Matières Sèches (MS), **caractérisé en ce que**, on alimente avec ladite boue en flux continu à un débit q, au travers d'une première restriction (13, 37, 83), directement ou au travers d'une enceinte dite première enceinte (35), une enceinte suivante dite deuxième enceinte (14, 40, 63, 82) en injectant de l'air dans ladite deuxième enceinte à un débit $Q \geq q$, pour obtenir une émulsion de gouttelettes de boue (44) dans l'air,

   on crée une perte de charge déterminée dans l'émulsion (15, 43, 87) par une deuxième restriction, (16, 51, 74, 91) pour alimentation d'une enceinte suivante dite troisième enceinte (17, 52, 73, 92),
   on injecte un floculant liquide (18, 54, 75, 102) dans ladite troisième enceinte,
   on dégaze ladite émulsion,
   on récupère l'émulsion ainsi dégazée dans un bac de récupération situé en aval des moyens de dégazage, de façon à ce que la boue floculée et aérée issue de ladite émulsion ainsi dégazée flotte alors en partie haute du bac, de sorte que le centrat liquide restant récupéré en partie basse du bac, soit chargé en Matières Sèches à un taux inférieur à 100 mg/l et présente un potentiel redox positif d'au moins 50mV et augmenté d'une valeur d'au moins 100mV par rapport à celui de la première boue en entrée de la première enceinte

puis on évacue en continu ou semi-continu ladite boue floculée et on réinjecte (32) le centrat liquide en amont du ou dans le réacteur biologique (4, 69, 82).

2.  Procédé selon la revendication 1, **caractérisé en ce qu'**on régule le taux de concentration en matière sèche de la boue floculée en évacuant la dite boue floculée plus ou moins vite.

3.  Procédé selon l'une quelconque des revendications précédentes, **caractérisé en ce que** on traite au préalable les eaux domestiques ou industrielles (3) dans une zone (2) de décantation primaire en amont du réacteur biologique, pour séparer physiquement du reste des eaux les éléments de Matière en suspension de taille supérieure à un diamètre équivalent déterminé supérieur à 0,01 mm.

4.  Procédé selon la revendication 2, **caractérisé en ce que** on réinjecte le centrât (32) dans une partie septique (33) de la zone de décantation primaire.

5.  Procédé selon l'une quelconque des revendications précédentes, **caractérisé en ce que** on transfert et on traite la boue floculée dans un réacteur digesteur alimenté en bactéries anaérobies situé en aval du bac de récupération, et on récupère le gaz ammoniac dégagé du fait de ladite digestion pour stockage et/ou utilisation énergétique.

6.  Procédé selon l'une quelconque des revendications précédentes, **caractérisé en ce qu'**il comprend une étape d'épaississement supplémentaire des boues floculées et aérées.

7.  Procédé selon l'une quelconque des revendications précédentes, **caractérisé en ce que** la première enceinte est à une première pression comprise entre 0,2 et 6 bars relatifs, **en ce que** le débit q est compris entre 5 m3/h et 50 m3/h, **en ce que** la deuxième enceinte est à une deuxième pression comprise entre 0,1 bar et 4 bars relatifs, le débit d'air Q étant compris entre 50 Nm3/h et 1000 Nm3/h, et **en ce que** la troisième enceinte est une troisième pression comprise entre 0,05 bar et 2 bars relatifs.

8.  Procédé selon l'une quelconque des revendications précédentes, **caractérisé en ce qu'**on alimente une enceinte intermédiaire entre les deuxième et troisième enceintes.

9.  Procédé selon l'une quelconque des revendications précédentes, **caractérisé en ce qu'**on injecte une deuxième fois de l'air en aval de la première injection dans une enceinte intermédiaire (48, 69) située entre la deuxième (35, 63) et la troisième enceinte (52, 73).

10. Procédé selon l'une quelconque des revendications précédentes, **caractérisé en ce que** les première, et deuxième restrictions (74) sont formées par des venturis.

11. Procédé selon l'une quelconque des revendications précédentes, **caractérisé en ce que** la deuxième enceinte (82) est une colonne (85) de diamètre moyen d et de hauteur H > 10 d.

12. Procédé selon l'une quelconque des revendications précédentes, **caractérisé en ce que** le floculant est un polymère injecté en sortie immédiate de la deuxième ou troisième restriction.

13. Dispositif (1, 60, 81) apte à l'épuration en continu d'un flux d'eaux domestiques ou industrielles (3) comprenant

    - un réacteur biologique (4, 69, 82) de traitement du flux
    - des moyens d'injection d'un gaz oxydant dans ledit réacteur,
    - des moyens (7, 8) de décantation de ladite boue, en partie basse du réacteur ou d'un séparateur/décanteur adjacent, lesdits moyens étant agencés pour effectuer une première séparation entre la partie liquide (9) que l'on évacue et une boue organique (10) comprenant entre 4 et 12 g/l de Matières Sèches (MS),
    ledit dispositif étant **caractérisé en ce que**, il comprend de plus et en aval du réacteur
    - optionnellement une première enceinte (35) ;
    - une enceinte suivante dite deuxième enceinte (14, 40, 63, 82) ;
    - une enceinte suivante dite troisième enceinte (17, 52, 73, 92 ;
    - des moyens (11) d'alimentation de ladite deuxième enceinte (14, 40, 63, 82) avec ladite boue en flux continu à un débit q au travers d'une première restriction, (13, 37, 83), directement ou au travers de ladite première enceinte (35); - des moyens d'injection d'air (41, 66, 84) dans ladite deuxième enceinte à un débit Q > q, pour obtenir une émulsion (15, 43, 87) de gouttelettes de boue (44) dans l'air, une deuxième restriction, , (16, 51, 74, 91) agencée pour créer une perte de charge déterminée dans l'émulsion lors du passage vers ladite troisième enceinte(17, 52, 73, 92),
- des moyens d'injection d'un liquide floculant (18, 54, 75, 102) dans ladite troisième enceinte,
- des moyens (76, 97) de dégazage de ladite émulsion,
- un bac de récupération (21, 56, 78, 98) de l'émulsion ainsi dégazée situé en aval des moyens de dégazage,
- des moyens de récupération de la boue floculée et aérée issue de ladite émulsion ainsi dégazée en partie haute du bac ;
- des moyens d'évacuation en continu ou semi-continu de ladite boue floculée ;
- des moyens de récupération du centrat liquide (22, 57, 79) restant en partie basse du bac ;
- et des moyens de réinjection (32) du centrat liquide dans et/ou en amont du réacteur biologique (4) ; le dispositif permettant d'obtenir ledit centrat liquide chargé en Matières Sèches à un taux inférieur à 100 mg/l et présentant un potentiel redox positif d'au moins 50mV et augmenté d'une valeur d'au moins 100mV, par rapport à celui de la boue en entrée des enceintes.

14. Dispositif selon la revendication 13, **caractérisé en ce que** qu'il comprend de plus une enceinte intermédiaire (48, 69) entre les deuxième (40, 63) et troisième (52, 73) enceintes et des moyens d'injection d'air en aval de la première injection dans ladite enceinte intermédiaire.

15. Dispositif selon l'une quelconque des revendications 13 et 14, **caractérisé en ce que** les première, et deuxième restrictions ( 74) sont formées par des venturis.

16. Dispositif selon l'une quelconque des revendications 13 à 15, **caractérisé en ce que** la deuxième enceinte (82) est une colonne (85) de diamètre moyen d et de hauteur H > 10 d.

## Patentansprüche

1. Verfahren zur kontinuierlichen Reinigung von fließendem Haus- oder Industriewasser (3), in welchem die Strömung in einem Bioreaktor behandelt wird (4, 69, 82) aufgrund der Einspeisung eines oxidierenden Gases in den Reaktor und das Erlangen einer ersten Trennung des flüssigen Teils (9), welcher abgeleitet wird, vom organischen Schlamm (10), welcher im unterem Teil des Reaktors oder in einem dahinter liegenden Absetzbecken/Abscheider geklärt wird, so dass der Schlamm zwischen 4 und 12 g/l Trockensubstanz (TS) enthält,
**dadurch gekennzeichnet,**

   **dass** durch den kontinuierlich fließenden Schlm zu einer Abflussmenge q, über eine erste Begrenzung (13, 37, 83), entweder direkt oder über eine Kammer, die sogenannte erste Kammer (35), eine nächste Kammer, die sogenannte zweite Kammer (14, 40, 63, 82) alimentiert wird, indem Luft mit einem Durchsatz von Q $\geq$ q in die zweite Kammer eingespeist wird, um eine Emulsion aus Schlammtröpfchen (44) in der Luft zu erhalten,
   **dass** ein festgelegter Druckverlust in der Emulsion (15, 43, 87) durch eine zweite Begrenzung (16, 51, 74, 91) für die Einspeisung in eine nachfolgende Kammer, die sogenannte dritte Kammer (17, 52, 73, 92), erzeugt wird,
   **dass** ein flüssiges Flockungsmittel (18, 54, 75, 102) in die dritte Kammer eingespeist wird,
   **dass** die Emulsion entgast wird,
   **dass** die somit entgaste Emulsion in einem Sammelbehälter gesammelt wird, welcher den Entgasungsmitteln nachgeschaltet ist, so dass der aus der somit entgasten Emulsion ausgeflockte und belüftete Schlamm im oberen Bereich des Behälters schwimmt, so dass das zurückbleibende flüssige Zentrat, welches im unteren Bereich des Behälters gesammelt wird, mit der Trockensubstanz in einem Verhältnis von weniger als 100 mg/l belastet wird und eine positive Redox-Spannung von mindestens 50 mV aufweist und um einen Wert von mindestens 100 mV im Vergleich zum ersten Schlamm am Eingang der ersten Kammer erhöht ist;
   **dass** dann der ausgeflockte Schlamm kontinuierlich oder semi-kontinuierlich abgeleitet und das flüssige Zentrat vor oder im Bioreaktor (4, 69, 82) wieder eingespeist (32) wird.

2. Verfahren nach Anspruch 1,
**dadurch gekennzeichnet,**
**dass** die Konzentration der Trockensubstanz des ausgeflockten Schlamms reguliert wird, indem der ausgeflockte Schlamm mehr oder weniger schnell abgeleitet wird.

3. Verfahren nach einem der vorausgehenden Ansprüche,
**dadurch gekennzeichnet,**

**dass** das Haus- oder Industriewasser (3) vorab in einer primären, dem Bioreaktor vorgeschalteten Klärungszone (2) behandelt wird, um jene Bestandteile des Schwebeguts physikalisch vom restlichen Wasser zu trennen, deren Größe den Gegenwert des festgelegten Durchmessers von 0,01 mm übersteigen.

4. Verfahren nach Anspruch 2,
**dadurch gekennzeichnet,**
**dass** das Zentrat (32) in einen septischen Teil (33) der primären Klärungszone wieder eingespeist wird.

5. Verfahren nach einem der vorausgehenden Ansprüche,
**dadurch gekennzeichnet,**
**dass** der ausgeflockte Schlamm in einen mit anaeroben Bakterien angereicherten, dem Sammelbehälter nachgeschalteten Digestor transferiert und behandelt wird und das, aufgrund dieser Digestion freigesetzte Ammoniakgas für die Speicherung und/oder die energetische Nutzung gesammelt wird.

6. Verfahren nach einem der vorausgehenden Ansprüche;
**dadurch gekennzeichnet,**
**dass** es einen zusätzlichen Schritt zur Verdickung des ausgeflockten und belüfteten Schlamms beinhaltet.

7. Verfahren nach einem der vorausgehenden Ansprüche,
**dadurch gekennzeichnet,**
**dass** die erste Kammer einen ersten relativen Druck zwischen 0,2 und 6 bar aufweist, dass sich der Durchsatz q auf einen Wert zwischen 5 $m^3$/h und 50 $m^3$/h beläuft, dass die zweite Kammer einen zweiten relativen Druck zwischen 0,1 bar und 4 bar aufweist, wobei sich der Luftdurchsatz Q zwischen 50 $Nm^3$/h und 1000 $Nm^3$/h befindet und dass die dritte Kammer einen dritten relativen Druck zwischen 0,05 bar und 2 bar aufweist.

8. Verfahren nach einem der vorausgehenden Ansprüche,
**dadurch gekennzeichnet,**
**dass** eine, zwischen der zweiten und dritten Kammer zwischengeschaltete Kammer alimentiert wird.

9. Verfahren nach einem der vorausgehenden Ansprüche,
**dadurch gekennzeichnet,**
**dass** nach der ersten Einspeisung ein zweites Mal Luft in eine zwischengeschaltete Kammer (48, 69) eingespeist wird, welche sich zwischen der zweiten (35, 63) und der dritten Kammer (52, 73) befindet.

10. Verfahren nach einem der vorausgehenden Ansprüche,
**dadurch gekennzeichnet,**
**dass** die erste und zweite Begrenzung (74) aus Venturi-Düsen bestehen.

11. Verfahren nach einem der vorausgehenden Ansprüche,
**dadurch gekennzeichnet,**
**dass** die zweite Kammer (82) eine Säule (85) ist, mit einem durchschnittlichen Durchmesser d und einer Höhe H $\geq$ 10 d.

12. Verfahren nach einem der vorausgehenden Ansprüche,
**dadurch gekennzeichnet,**
**dass** das Flockungsmittel ein Polymer ist, welches sofort nach dem Ausfluss aus der zweiten oder dritten Begrenzung eingespeist wird.

13. Vorrichtung (1, 60, 81),
die für die kontinuierliche Klärung von fließendem Haus- oder Industriewasser (3) geeignet ist, einschließlich

- eines Bioreaktors (4, 69, 82) zur Behandlung der Strömung,
- Mittel zur Einspeisung eines Gases, welches im Reaktor oxidiert,
- Mittel (7, 8) zur Klärung des Schlammes, im unteren Teil des Reaktors oder in einer angrenzenden Scheideanlage/einem angrenzenden Abscheider, wobei die Mittel so angeordnet sind, dass sie eine erste Trennung des flüssigen Teils (9), welcher abgeleitet wird, und des organischen Schlamms (10), der zwischen 4 und 12 g/l Trockensubstanz (TS) enthält, durchführen,
wobei die Vorrichtung **dadurch gekennzeichnet ist, dass**, sie zusätzlich und dem Reaktor nachgeschaltet Folgendes umfasst:

- optional eine erste Kammer (35);
- eine darauffolgende Kammer, die sogenannte zweite Kammer (14, 40, 63, 82);
- eine darauffolgende Kammer, die sogenannte dritte Kammer (17, 52, 73, 92);
- Mittel (11) zur Einspeisung in die zweite Kammer (14, 40, 63, 82) des, mit einem Durchsatz q, direkt oder über die erste Kammer (35), kontinuierlich durch eine erste Begrenzung (13, 37, 83) fließenden Schlamms,
- Mittel zur Einspeisung von Luft (41, 66, 84) in die zweite Kammer mit einem Durchsatz von Q ≥ q, um eine Emulsion (15, 43, 87) mit Schlammtröpfchen (44) in der Luft zu erzielen,
- eine zweite Begrenzung, (16, 51, 74, 91) derartig angeordnet, dass in der Emulsion während des Übergangs in die dritte Kammer (17, 52, 73, 92), ein festgelegter Druckverlust entsteht,
- Mittel zur Einspeisung eines flüssigen Flockungsmittels (18, 54, 75, 102) in die dritte Kammer,
- Mittel (76, 97) zur Entgasung der Emulsion,
- ein den zur Entgasung bestimmten Mitteln nachgeschalteter Sammelbehälter (21, 56, 78, 98) für die somit entgaste Emulsion,
- Mittel zur Sammlung des ausgeflockten und belüfteten Schlamms, welcher somit im oberen Teil des Behälters aus der entgasten Emulsion entstanden ist;
- Mittel zur kontinuierlich oder semi-kontinuierlichen Ableitung des ausgeflockten Schlamms;
- Mittel zur Sammlung des flüssigen Zentrats (22, 57, 79), das im unteren Teil des Behälters zurückbleibt;
- sowie Mittel zur erneuten Einspeisung (32) des flüssigen Zentrats in den Bioreaktor und/oder bereits davor (4);

wobei die Vorrichtung das flüssige, mit einer Trockensubstanzquote von weniger als 100 mg/l belastetes Zentrat erzielen und eine positive Redox-Spannung von mindestens 50 mV aufweisen kann, die um einen Wert von mindestens 100 mV im Vergleich zum Schlamm beim Eintritt in die Kammer angestiegen ist.

**14.** Vorrichtung nach Anspruch 13,
**dadurch gekennzeichnet,**
**dass** sie zusätzlich eine zwischen der zweiten (40, 63) und der dritten (52, 73) Kammer zwischengeschaltete Kammer (48, 69) sowie Mittel zur Einspeisung von Luft nach der ersten Einspeisung in die zwischengeschaltete Kammer aufweist.

**15.** Vorrichtung nach einem der Ansprüche 13 und 14,
**dadurch gekennzeichnet,**
**dass** die erste und zweite Begrenzung (74) aus Venturi-Düsen bestehen.

**16.** Vorrichtung nach einem der Ansprüche 13 bis 15,
**dadurch gekennzeichnet,**
**dass** die zweite Kammer (82) eine Säule (85) mit dem durchschnittlichen Durchmesser d und einer Höhe H ≥ 10 d ist.

## Claims

**1.** Method for continuously purifying a flow of domestic or industrial waters (3), wherein the flow is subjected to treatment in a biological reactor (4, 69, 82) by injecting an oxidizing gas into said reactor and obtaining a first separation between the liquid part (9), which is discharged, and an organic sludge (10), which is decanted in the bottom part of the reactor or of an adjacent separator/settler, such that said sludge comprises between 4 and 12 g/l of Dry Matter (DM), **characterized in that** said sludge is used to supply, through a first restriction (13, 37, 83) directly, or through a chamber termed first chamber (35), a following chamber termed second chamber (14, 40, 63, 82) in continuous flow at a rate q, by injecting air into said second chamber at a rate Q ≥ q, to give an emulsion of droplets of sludge (44) in air,

a predetermined pressure drop is created in the emulsion (15, 43, 87) by a second restriction (16, 51, 74, 91) for supplying a following chamber termed third chamber (17, 52, 73, 92),
a liquid flocculant (18, 54, 75, 102) is injected into said third chamber,
said emulsion is degassed,
the emulsion thus degassed is recovered in a recovery tank situated downstream of the degassing means, in such a way that the flocculated and aerated sludge obtained from said emulsion thus degassed then floats in the top part of the tank, such that the liquid centrate which remains, recovered in the bottom part of the tank, has a Dry Matter load of less than 100 mg/l and has a positive redox potential of at least 50 mV which is increased by a value of at least 100 mV relative to that of the first sludge entering the first chamber, after which said flocculated sludge is continuously or semicontinuously discharged, and the liquid centrate is reinjected (32) upstream of or into the biological reactor (4, 69, 82).

2. Method according to Claim 1, **characterized in that** the dry matter concentration of the flocculated sludge is regulated by discharging of said flocculated sludge at a greater or lesser speed.

3. Method according to any one of the preceding claims, **characterized in that** the domestic or industrial waters (3) are treated beforehand in a primary settling zone (2) upstream of the biological reactor, for physical separation of the suspended matter elements with a size greater than a predetermined equivalent diameter of more than 0.01 mm from the remainder of the waters.

4. Method according to Claim 2, **characterized in that** the centrate (32) is reinjected into a septic part (33) of the primary settling zone.

5. Method according to any one of the preceding claims, **characterized in that** the flocculated sludge is transferred to and treated in a digester reactor which is supplied with anaerobic bacteria and is situated downstream of the recovery tank, and the ammonia gas given off as a result of said digestion is recovered for energy use and/or storage.

6. Method according to any one of the preceding claims, **characterized in that** it comprises a step of supplementary thickening of the flocculated and aerated sludges.

7. Method according to any one of the preceding claims, **characterized in that** the first chamber is at a first pressure of between 0.2 and 6 bar relative, **in that** the rate q is between 5 m3/h and 50 m3/h, **in that** the second chamber is at a second pressure of between 0.1 bar and 4 bar relative, the rate of air Q being between 50 Nm$^3$/h and 1000 Nm$^3$/h, and **in that** the third chamber is at a third pressure of between 0.05 bar and 2 bar relative.

8. Method according to any one of the preceding claims, **characterized in that** is supplied an intermediate chamber between the second and third chambers.

9. Method according to any one of the preceding claims, **characterized in that** air is injected a second time downstream of the first injection into an intermediate chamber (48, 69) situated between the second (35, 63) and third (52, 73) chambers.

10. Method according to any one of the preceding claims, **characterized in that** the first and second restrictions (74) are formed by venturis.

11. Method according to any one of the preceding claims, **characterized in that** the second chamber (82) is a column (85) with a mean diameter d and a height H ≥ 10 d.

12. Method according to any one of the preceding claims, **characterized in that** the flocculant is a polymer which is injected immediately at the outlet of the second or third restriction.

13. Device (1, 60, 81) for continuous purification of a flow of domestic or industrial waters (3), comprising

- a biological reactor (4, 69, 82) for flow treatment,
- means for injecting an oxidizing gas into said reactor,
- means (7, 8) for decanting said sludge, in the bottom part of the reactor or of an adjacent separator/settler, said means being arranged for carrying out a first separation between the liquid part (9), which is discharged, and an organic sludge (10) comprising between 4 and 12 g/l of Dry Matter (DM),
said device being **characterized in that** it further comprises, downstream of the reactor
- optionally a first chamber (35);
- a following chamber termed second chamber (14, 40, 63, 82);
- a following chamber termed third chamber (17, 52, 73, 92);
- means (11) for supplying said second chamber (14, 40, 63, 82) with said sludge in continuous flow at a rate q, through a first restriction (13, 37, 83), directly or through said first chamber (35);

- means for injecting air (41, 66, 84) into said second chamber at a rate Q ≥ q, to give an emulsion (15, 43, 87) of droplets of sludge (44) in air,
- a second restriction (16, 51, 74, 91) arranged to create a predetermined loss of pressure in the emulsion during passage toward said third chamber (17, 52, 73, 92),
- means for injecting a liquid flocculant (18, 54, 75, 102) into said third chamber,
- means (76, 97) for degassing said emulsion,
- a tank for recovery (21, 56, 78, 98) of the emulsion thus degassed, situated downstream of the degassing means,
- means for recovering the flocculated and aerated sludge obtained from said emulsion thus degassed in the upper part of the tank;
- means for continuously or semicontinuously discharging said flocculated sludge;
- means for recovering the liquid centrate (22, 57, 79) remaining in the lower part of the tank;
- and means for reinjecting (32) the liquid centrate into and/or upstream of the biological reactor (4);
- the device making it possible to obtain said liquid centrate loaded with Dry Matter at a level of less than 100 mg/l, and having a positive redox potential of at least 50 mV, which is increased by a value of at least 100 mV relative to that of the sludge entering the chambers.

14. Device according to Claim 13, **characterized in that** it further comprises an intermediate chamber (48, 69) between the second (40, 63) and third (52, 73) chambers, and means for injecting air downstream of the first injection into said intermediate chamber.

15. Device according to either one of Claims 13 and 14, **characterized in that** the first and second restrictions (74) are formed by venturis.

16. Device according to any one of Claims 13 to 15, **characterized in that** the second chamber (82) is a column (85) with a mean diameter d and a height H ≥ 10 d.

**Fig.1**

EP 3 303 231 B1

**Fig.2**

**Fig.3**

**Fig.4**

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4042493 A

- EP 2354096 A